# EUROPÄISCHE PATENTSCHRIFT

(11) **EP 1 002 774 B1**
(45) Veröffentlichungstag und Bekanntmachung des Hinweises auf die Patenterteilung: **03.07.2002**
(21) Anmeldenummer: 99402137.6
(22) Anmeldetag: 27.08.1999
(51) Int. Cl.: C03C 25/18

(54) **Vorrichtung zum Beschichten einer optischen Faser**
Apparatus for coating an optical fibre
Appareil pour revêtir une fibre de verre optique

(30) Priorität: 25.09.1998 DE 19844023
(43) Veröffentlichungstag der Anmeldung: 24.05.2000
(73) Patentinhaber: ALCATEL, 75008 Paris (FR)
(72) Erfinder: Berndt, Jürgen, Dipl.-Ing., 41748 Viersen (DE)
(74) Vertreter: Rausch, Gabriele, Dr.

(56) Entgegenhaltungen:
- DE-A- 3 832 838
- DE-U- 9 317 617
- GB-A- 2 138 167
- GB-A- 2 179 270
- US-A- 4 370 355

## Beschreibung

Gegenstand der vorliegenden Erfindung ist eine Vorrichtung zum Beschichten einer optischen Faser nach dem Oberbegriff des Anspruchs 1.

Zur Herstellung einer optischen Faser wird eine sogenannte Preform erhitzt und eine Faser aus ihr herausgezogen. Unmittelbar nach dem Ziehvorgang wird die noch heiße Faser in einem Gasstrom abgekühlt.

Die abgekühlte Faser wird im selben Arbeitsgang mit einem Überzug aus einem Harz versehen, der in einer Vemetzungseinrichtung gehärtet wird. Im Anschluß daran wird die beschichtete Faser auf eine Spule aufgewickelt.

Für das Beschichten wird üblicherweise eine Einrichtung verwendet, die eine Einführungsdüse und im Abstand dazu eine Ausführungsdüse aufweist. In dem zwischen der Einführungsdüse und der Ausführungsdüse befindlichen Raum befindet sich das Harz. Die Einführungsdüse besitzt eine Bohrung, deren Durchmesser nur geringfügig größer ist als der Durchmesser der Faser. Sie dient im wesentlichen zur exakten Führung der Faser. Die Ausführungsdüse weist ebenfalls eine Bohrung auf, deren Durchmesser größer ist als der Durchmesser der Bohrung in der Einführungsdüse. Durch den zwichen der durch die Ausführungsdüse austretenden Faser und der Bohrung befindlichen Spalt tritt das Harz aus und legt sich unter normalen Bedingungen an die Glasfaser mit einer über den Umfang gesehen nahezu gleichen Schichtdicke an.

Durch in dem flüssigen Harz befindliche Gasblasen und Schmutzpartikel kann es passieren, daß sich in den Bereichen und in der Nähe der Bohrung der Auslaufdüse Harz ansammelt und in unkontrollierter Weise löst und dabei von der schnell durchlaufenden Faser mitgenommen wird. Hierdurch kommt es zu unerwünschten Schwankungen des Außendurchmessers der beschichteten Faser. Da der Außendurchmesser der beschichteten Faser genormt ist - im Regelfall beträgt der Außendurchmesser 250 µm - führen derartige Durchmesserschwankungen zu fehlerhaften Fasem.

Eine Lackseebildung unterhalb der Beschichtungsdüse wird insbesondere durch einen inhomogenen Lackfluß im Beschichtungsdüsenkanal der unteren Beschichtungsdüse durch z. B. Störungen auf der Faseroberfläche, Schmutzpartikel auf der Faser oder im Lack, Luftbläschen bzw. Gasbläschen im Lack, usw. verursacht. Hierdurch wird ein inhomogener "Pumpeffekt" im Düsenkanal initiiert, der zum Abfließen überschüssigen Lackes auf der Unterseite der Beschichtungsdüse führt. Bei jedem emeuten Pumpeffekt durch Störungen wird die abgelagerte Lackmenge größer und akkumuliert sich zu einem ringförmigen Lacksee. Dieser wird mit zunehmender Größe statisch immer instabiler und wird durch die vorbeilaufende Faser teilweise wieder unkontrolliert mitgerissen. Der Durchmesser steigt sprunghaft an, was zu unbrauchbaren Fasem führt.

Bislang war man gezwungen, nach einer bestimmten Zeit die Auslaufdüse auszutauschen und zu reinigen. Nachteilig ist hierbei, daß der Fertigungsprozeß unterbrochen werden muß. Darüberhinaus war es zeitaufwendig, die neu eingesetzte Auslaufdüse auf die Bohrung der Einlaufdüse ausgerichtet einzubauen.

Zur Lösung dieses Problems ist es aus der EP 0 858 977 A1 bekannt, eine auswechselbare Kartusche vorzusehen, in der die Einlaufdüse und die Auslaufdüse auswechselbar angeordnet sind. Im Falle des Auftretens eines Fehlers bzw. vorsorglich nach einer vorbestimmten Fertigungsdauer wird die gesamte Kartusche ausgewechselt und gereinigt. Auch bei dieser Lösung läßt sich eine Unterbrechung der Fertigung nicht vermeiden.

Der Erfindung liegt von daher die Aufgabe zugrunde, eine Vorrichtung anzugeben, mit welcher eine optische Faser mit mindestens einem Überzug mit gleichmäßiger Wanddicke versehen werden kann, wobei die Vorrichtung eine Fertigungsunterbrechung wegen Schwankungen der Wanddicke bzw. des Außendurchmessers im wesentlichen ausschließt.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Durch die Beschichtung der Stimfläche der Auslaufdüse an ihrer Auslaufseite wird verhindert, daß sich bedingt durch Staubpartikel oder Gasbläschen dort ein ringsymmetrischer Lacksee bildet.

Durch die schlechte Benetzbarkeit aufgrund der unpolaren Beschichtungsmaterialien wird der Lack am Abfließen auf die Düsenunterseite gehindert. Hierdurch kann sich durch den Pumpeffekt der Lack nicht zu größeren kritischen Lackansammlungen aufbauen. Zuviel Lack wird in unkritischer Menge von der Faser selbst direkt weitertransportiert und eventuelle Durchmesserveränderungen bleiben im erlaubten Toleranzbereich.

Darüberhinaus wird eine Teilaushärtung bzw. Aushärtung des Lackes durch die sich unterhalb der Beschichtungsdüse befindlichen UV-Strahler vermieden. Vagabundierende UV-Strahlen sind immer vorhanden und würden zu Vemetzungsreaktionen im Lacksee führen, wodurch sich weitere Probleme ergeben können.

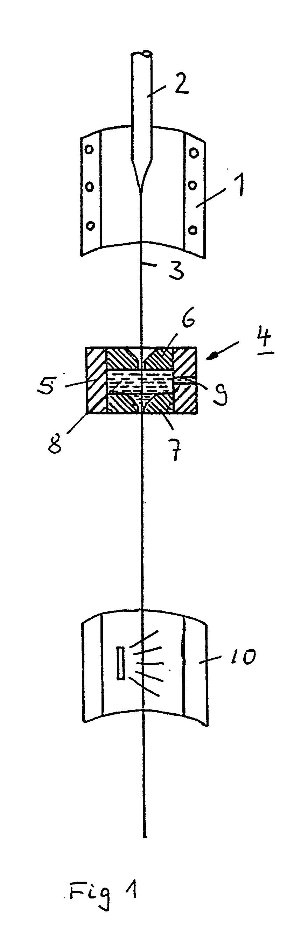

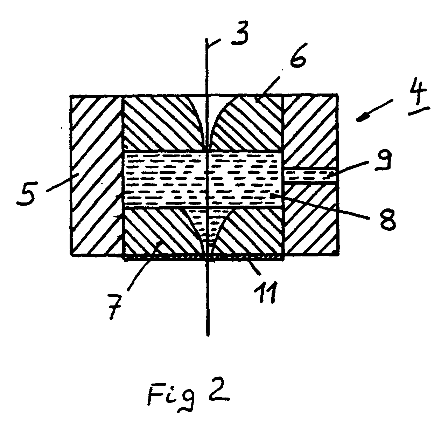

Die Erfindung ist anhand der in den Figuren 1 und 2 schematisch dargestellten Ausführungsbeispiele näher erläutert.

Aus der im Ofen 1 erhitzten Preform 2 wird die optische Faser 3 abgezogen. Zum Zwecke der Beschichtung läuft die Faser 3 in die Beschichtungsvorrichtung 4 ein, die sich unterhalb des Ofens 1 befindet. Die Beschichtungsvorrichtung 4 besteht aus einem Gehäuse 5 mit einer Einlaufdüse 6 und einer Auslaufdüse 7. Zwischen Einlaufdüse 6 und Auslaufdüse 7 befindet sich die Beschichtungskammer 8, welcher über eine Einlaßöffnung 9 das Beschichtungsmaterial zugeführt wird.

Das Beschichtungsmaterial ist ein UV-härtbares Polymermaterial, welches in flüssiger Form in der Beschichtungskammer 8 vorliegt. Als bevorzugtes Material wird ein Harz auf Acrylatbasis verwendet.

Unterhalb der Beschichtungsvorrichtung 4 befindet sich ein UV-Strahler 10, der für eine Aushärtung der Beschichtung sorgt.

Der Durchmesser der nicht näher bezeichneten Bohrung der Einlaufdüse 6 ist geringfügig größer als der Durchmesser der Faser 3, damit die Faser 3 konzentrisch zur nicht näher bezeichneten Bohrung der Auslaufdüse 7 geführt wird.

Die mit hoher Geschwindigkeit durch die Beschichtungsvorrichtung 4 durchlaufende Faser 3 wird in der Beschichtungskammer 8 mit dem Überzugsmaterial benetzt. Der Durchmesser der Bohrung der Auslaufdüse 7 bestimmt den Außendurchmesser der Beschichtung.

Zwischen der Beschichtungsvorrichtung 4 und dem UV-Strahler 10 kann noch in nicht dargestellter Weise eine Schutzgaszone vorgesehen sein.

In Figur 2 ist die Beschichtungsvorrichtung 4 vergrößert dargestellt.

Um zu verhindern, daß sich das Beschichtungsmaterial an der ausgangsseitigen Stirnfläche der üblicherweise aus Hartmetall bestehenden Auslaufdüse 7 festsetzt und unkontrolliert von der Faser 3 mitgenommen wird und dadurch Durchmesserschwankungen der Beschichtung verursacht, weist die ausgangsseitige Stimfläche der Auslaufdüse 7 eine Schicht 11 aus einem Material auf, an welchem das Überzugsmaterial für die Faser 3 nicht haftet. Die Dicke der Schicht 11 kann extrem gering sein und liegt üblicherweise zwischen 0,5 und 10 µm. Als Materialien für die Schicht haben sich Silikon und fluorhaltige Polymere als besonders geeignet erwiesen. Silikon wird in Form eines Silikonlackes oder als Silikonöl auf die Stimfläche aufgetragen. Als besonders vorteilhaft hat sich jedoch eine Schicht 11 aus Polytetrafluorethylen erwiesen, welche auf die Stimfläche aufgesintert wird. Eine solche Schicht zeigt sich als dauerhaft gegenüber thermischen und mechanischen Einflüssen.

## Patentansprüche

1. Vorrichtung zum Beschichten einer optischen Faser mit einem Überzug aus einem UVhärtbaren Polymeren, bestehend aus einer eine Einlaufdüse und eine Auslaufdüse aufweisenden Beschichtungskammer zum Aufbringen des Überzuges auf die optische Faser sowie einem hinter der Auslaufdüse angeordneten UV-Strahler, **dadurch gekennzeichnet, daß** die dem UV-Strahler (10) zugekehrte Stirnfläche der Auslaufdüse (7) mit einem für das Überzugsmittel antiadhäsiven Material (11) beschichtet ist.

2. Vorrichtung nach Anspruch 1, **dadurch gekennzeichnet, daß** das antiadhäsive Material (11) Silikon oder Silikonöl ist.

3. Vorrichtung nach Anspruch 1, **dadurch gekennzeichnet, daß** das antiadhäsive Material (11) ein fluorhaltiges Polymer ist.

4. Vorrichtung nach Anspruch 3, **dadurch gekennzeichnet, daß** das fluorhaltige Polymer Polytetrafluorethylen ist.

5. Vorrichtung nach einem der Ansprüche 1 bis 4, **dadurch gekennzeichnet, daß** die Schichtdicke des antiadhäsiven Materials (11) zwischen 0,5 und 10 µm beträgt.

## Claims

1. Facility for coating an optical fibre with a coating of a UV-curable polymer, consisting of a coating chamber, comprising an intake nozzle and an outlet nozzle, for applying the coating to the optical fibre, and of a UV source disposed behind the outlet nozzle, **characterized in that** the end face of the outlet nozzle (7) facing the UV source (10) is coated with a material (11) which is anti-adhesive with respect to the coating material.

2. Facility according to Claim 1, **characterized in that** the anti-adhesive material (11) is silicone or silicone oil.

3. Facility according to Claim 1, **characterized in that** the anti-adhesive material (11) is a fluorine-containing polymer.

4. Facility according to Claim 3, **characterized in that** the fluorine-containing polymer is polytetrafluorethylene.

5. Facility according to one of Claims 1 to 4, **characterized in that** the layer thickness of the anti-adhesive material (11) is between 0.5 and 10 µm.

## Revendications

1. Dispositif destiné à revêtir une fibre optique avec un revêtement réalisé dans un polymère durcissable par rayonnement ultraviolet, comprenant une chambre de revêtement, munie d' une buse d'admission et d'une buse de sortie et destinée à déposer le revêtement sur la fibre optique, ainsi qu'une source de rayonnement ultraviolet, montée en aval de la buse de sortie, **caractérisé en ce que** la face frontale de la buse de sortie (7), orientée vers le dispositif de rayonnement ultraviolet (10), est revêtue avec un matériau (11) antiadhésif face au matériau de revêtement.

2. Dispositif selon la revendication 1, **caractérisé en ce que** le matériau antiadhésif (11) est une silicone ou une huile de silicones.

3. Dispositif selon la revendication 1, **caractérisé en ce que** le matériau antiadhésif (11) est un polymère contenant du fluor.

4. Dispositif selon la revendication 3, **caractérisé en ce que** le polymère contenant du fluor est le polytétrafluoréthylène.

5. Dispositif selon une des revendications 1 à 4, **caractérisé en ce que** l'épaisseur de la couche de matériau antiadhésif (11) est comprise entre 0,5 et 10 µm.
